# EUROPEAN PATENT APPLICATION

(11) **EP 3 456 465 A2**
(43) Date of publication of application: **20.03.2019**
(21) Application number: 18189679.6
(22) Date of filing: 20.08.2018
(51) Int. Cl.: B23Q 3/08

(54) **A METHOD OF SECURING A WORKPIECE FOR A MACHINING OPERATION AND A MOULD ASSEMBLY FOR SUCH A WORKPIECE**

(30) Priority: 18.09.2017 GB 201714976
(71) Applicant: Rolls-Royce plc, London SW1E 6AT (GB)
(72) Inventor: Novovic, Donka, Derby, Derbyshire DE24 8BJ (GB); Kelsey, James, Derby, Derbyshire DE24 8BJ (GB); Curtis, David, Derby, Derbyshire DE24 8BJ (GB)
(74) Representative: Rolls-Royce plc

(57) **Abstract**

A method of securing a workpiece for a machining operation comprises the steps of:
(i) providing a mould, the mould comprising a mould body and a mould cavity;
(ii) positioning the workpiece within the mould cavity;
(iii) providing a plurality of part locator rods, each of the part locator rods being located in the mould body and protruding into the mould cavity, a distal end of each part locator rod abutting against an outer surface of the workpiece;
(iv) providing a fluid, the fluid filling a void defined between an outer surface of the workpiece and an internal surface of the mould cavity;
(v) cooling the mould, workpiece and fluid to a temperature below a freezing point of the fluid;
(vi) removing the workpiece encapsulated in the frozen fluid, from the cavity, with the part locator rods protruding from an outer surface of the frozen fluid;
(vii) securing the encapsulated workpiece on a machine tool; and
(viii) using the protruding part locator rods to position the workpiece on the machine tool in readiness for the machining operation.

## Description

### Field of the Disclosure

The present disclosure relates to a method of securing a workpiece by encapsulating the workpiece in a frozen fluid and particularly, but not exclusively, to a method of securing a workpiece formed from a ceramic matrix composite material by encapsulating the workpiece in a frozen fluid.

### Background to the Disclosure

Ceramic Matrix Composite (CMC) materials are a class of composite materials in which a ceramic matrix material is reinforced with directional ceramic fibres. CMC materials have excellent high temperature properties and are often considered as a substitute for metal alloys, such as nickel-based superalloys, in high temperature applications.

CMC materials often require machining processes such as grinding, drilling, milling or other processes in order to achieve the final shape of the workpiece. However mechanical clamping fixtures may damage the brittle ceramic matrix material. It can be difficult to precisely locate a fixture against -CMC surfaces. There can also be dimensional variability, within defined tolerance limits, between successive CMC components in their as-moulded form, which further complicates their location in a fixture. In addition conventional mechanical fixtures often restrict access to parts of the workpiece, which in turn requires the use of multiple fixtures and machining operations and so further increase cost and cycle time for the finished workpiece.

The heterogeneous and anisotropic nature of CMC materials together with their high hardness makes them susceptible to *inter alia* delamination, edge chipping, fibre damage, and fibre pull-out. Conventional mechanical clamping fixtures have difficulty in providing full support to all areas of CMC components to oppose the machining forces and prevent the above-mentioned defects, which is critical when the orientation of the fibre laminates and/or plies changes direction relative to the cutting direction (the feed direction).

### Statements of Disclosure

According to a first aspect of the present disclosure there is provided a method of securing a workpiece for a machining operation, the method comprising the steps of:
(i) providing a mould, the mould comprising a mould body and a mould cavity;
(ii) positioning the workpiece within the mould cavity;
(iii) providing a plurality of part locator rods, each of the part locator rods being located in the mould body and protruding into the mould cavity, a distal end of each part locator rod abutting against an outer surface of the workpiece;
(iv) providing a fluid, the fluid filling a void defined between an outer surface of the workpiece and an internal surface of the mould cavity;
(v) cooling the mould, workpiece and fluid to a temperature below a freezing point of the fluid;
(vi) removing the workpiece encapsulated in the frozen fluid, from the cavity, with the part locator rods protruding from an outer surface of the frozen fluid;
(vii) securing the encapsulated workpiece on a machine tool; and
(viii) using the protruding part locator rods to position the workpiece on the machine tool in readiness for the machining operation.

Encapsulating the CMC component in the frozen fluid provides mechanical support to the whole of the external surface of the CMC component. This enables the CMC component to be machines without experiencing delamination, cracking, chipping or fibre damage adjacent to the machined feature. This in turn improves the quality of the machined CMC component.

The use of the frozen fluid to encapsulate the CMC component enables the cost effective machining of CMC materials.

Locating the CMC component over its entire external surface enables the use of more aggressive machining rates because of the improved location security of the CMC component. This allows for reduced machining cycle time and hence reduced costs.

The low temperature of the frozen fluid encapsulation provides a cooling action to the machining process and may extend the life of the cutting tool. This in turn reduces machining costs.

The use of the encapsulation method of the present disclosure allows for fast and simple changeover from one machining set-up to another, eliminates the risk of damage to the workpiece caused by the fixturing, and provides no risk of contamination. The encapsulation of the CMC component by the freezing of the encapsulation fluid provides a rapid, flexible, robust, and thus cost effective fixturing process.

The encapsulation of the CMC component is readily adaptable to all CMC component sizes and geometries. Furthermore the encapsulation method is readily scalable to larger and smaller components.

The low temperature of the frozen fluid that encapsulates the CMC component may provide sufficient cooling to the machining process to enable the elimination of the supply and circulation of an external machining fluid. This in turn makes the method of the present disclosure simpler and more cost effective than the prior art.

The frozen fluid that encapsulates the workpiece is easily machined by any conventional cutting tool, and thus does not adversely affect machine tool life. In this way, the method of the present disclosure does not result in any increase in cutting tool cost. The adaptability of the encapsulation process enables a user to readily accommodate multiple design changes in the CMC component whilst still being able to secure the CMC component using the method of the present disclosure. Thus the method of the present disclosure allows multiple design changes without consequent increases in fixturing costs and so can reduce new product introduction (NPI) costs.

The method of the present disclosure enables easy and straightforward removal of the CMC component from the encapsulation fixture by simply allowing the frozen encapsulation fluid to melt. This eliminates any risk of damage to the machined CMC component when removing it from the encapsulation.

By locating the CMC component over its entire surface during the securing of the component, the method of the present disclosure is insensitive to surface irregularities. Moreover it provides critical support to all 'sensitive 'areas, such as where the primary laminate, ply or fibre bundle direction is oriented in a perpendicular direction relative to the cutting force, as well as at 'entry of cut' and 'exit of cut' regions.

A further advantage of the method of the present disclosure is that the frozen fluid encapsulating the workpiece provides a more stable cutting force and provides a continuous cut through the frozen fluid and workpiece, in contrast to the intermittent cut experienced when machining using conventional mechanical fixtures. In the method of the present disclosure, the stable cutting force should result in improved workpiece quality and longer tool life.

Optionally, the mould cavity is sized to accommodate the workpiece with a predetermined clearance between the outer surface of the workpiece and the internal surface of the mould cavity.

The size and shape of the mould cavity is dictated by a need to provide a minimum predetermined clearance between the outer surface of the workpiece and the internal surface of the mould cavity. This minimum predetermined clearance may vary with, *inter alia,* the absolute size of the workpiece, the amount of material that is to be removed during the machining process, and the shape of the workpiece.

A smaller workpiece may require a smaller predetermined clearance between the outer surface of the workpiece and the internal surface of the mould cavity. The size of the predetermined clearance corresponds to thickness of the frozen fluid that encapsulates the workpiece.

If a larger quantity of material is to be removed from the workpiece in a single operation, i.e. a larger depth of cut, then this may require a larger predetermined clearance between the outer surface of the workpiece and the internal surface of the mould cavity. An irregularly shaped component or a component having particularly slender geometry may require a larger predetermined clearance between the outer surface of the workpiece and the internal surface of the mould cavity.

The predetermined clearance between the outer surface of the workpiece and the internal surface of the mould cavity (i.e. the thickness of the frozen fluid) may be adjusted for particular features of the workpiece to match a selected cutting strategy and the resulting cutting forces. For example, if a hole is to be drilled through the workpiece, the clearance (frozen fluid thickness) would be larger on the hole exit side.

Optionally, step (vi) comprises the additional subsequent step of:
(vi)' positioning the encapsulated workpiece on a cooling fixture.

The use of a cooling fixture enables the encapsulated CMC component to be located on a machining apparatus for a longer period of time without degradation of the ice encapsulation. In one arrangement, the cooling fixture is sized to maintain the ice encapsulation indefinitely. In this arrangement, the encapsulated CMC component may remain on the machining apparatus for an unlimited period of time while maintaining the integrity of the ice encapsulation.

In another arrangement, the cooling fixture may be sized to slow the degradation of the frozen fluid encapsulation. This would require a smaller, lighter and lower cost cooling fixture but may limit the length of time for which the ice encapsulation could be relied upon to securely position the CMC component.

Optionally, step (iii) comprises the additional subsequent step of:
(iii)' positioning a part locator rod in each of the orthogonal x and y directions, each part locator rod being positioned to abut the workpiece so as to locate the workpiece in the x-y plane.

The use of part locator rods in each of the x and y directions enables a workpiece to be located in the x-y plane. For simple machining operations, such as hole drilling, this x-y location may be sufficient, and therefore provides a simple and cost effective means of positionally locating the workpiece.

Optionally, step (iii) comprises the additional subsequent step of:
(iii)' positioning pairs of part locator rods in each of the three orthogonal x, y, and z directions, each pair of part locator rods being positioned in an opposing arrangement to abut the workpiece so as to locate the workpiece in each of the three x, y, and z planes.

The use of pairs of part locator rod in each of the three x, y, and z directions, with each respective pair of part locator rod in an opposing arrangement and abutting the workpiece, enables the workpiece to be accurately positioned on a machine tool, in the x, y, and z planes, after the workpiece has been encapsulated in the frozen fluid. This allows any machining operation to be precisely and accurately conducted on the workpiece without the need to access the surface of the workpiece.

Optionally, the fluid is water.

Using water for the encapsulation fluid makes the method of the disclosure simple and cost effective because water is readily available and easily processed.

Optionally, the cooling fixture is selected from the group consisting of thermoelectric cooling devices, and induction cooling plates.

The thermoelectric cooling devices may be, for example, Peltier plates, or liquid or gas cooling devices (e.g. cryogenic cooling, CO₂ cooling). These may be supplied with cooling medium via external cooling nozzles. Alternatively, the locator rods may be hollow and the cooling medium may be supplied through the hollow locator rods. In a further alternative, the cooling medium may be supplied through special channels.

The cooling mechanism effected by the cooling fixture may be continuously applied to cool the encapsulated workpiece. Alternatively, the cooling mechanism effected by the cooling fixture may be intermittently applied to cool the encapsulated workpiece.

The cooling fixture may take the form of a planar cooling plate. Alternatively, the cooling fixture may take the form of external cooling, for example using nozzles to direct a cooling flow onto the encapsulated workpiece, through the locator rods, or through channels or tubes arranged in the encapsulation.

Alternatively, the cooling fixture may take the form of a cooling mat. The cooling mat may be conformal to one or more portions of the encapsulated CMC workpiece. The use of a conformal cooling mat provides an increased surface area contact between the cooling mat and the encapsulated workpiece and hence increases the cooling efficiency of the cooling fixture.

Optionally, step (vii) comprises the additional subsequent step of:
(vii)' cooling the machine tool.

Providing cooling to the machine tool will prevent the thermal mass of the machine tool from transferring heat energy to the frozen encapsulated workpiece and so will further assist in maintaining the integrity of the workpiece encapsulation.

Optionally, the fluid further comprises a mineral oil in combination with an emulsifying agent.

Adding a mineral oil to the fluid that is frozen to encapsulate the workpiece will decrease the cutting forces experienced by the cutting tool during machining of the workpiece. Incorporating the mineral oil in the frozen fluid eliminates the need to provide a separate cutting fluid supply and circulation system thus making the method of the disclosure simpler and cheaper.

Optionally, the emulsifying agent is a detergent.

The use of a detergent will improve the miscibility of the mineral oil in the fluid used to encapsulate the workpiece and so provide a more uniform distribution of the mineral oil through the encapsulation volume.

Optionally, the mould body is formed in two or more mould body portions.

Providing the mould body in two or more portion enables the mould body to be easily disassembled when removing the workpiece after the freezing of the encapsulation fluid. This enables the mould body to be reused.

In another arrangement the mould body is formed as a single portion that is that fractured after the freezing of the encapsulation fluid. This alternative arrangement may be simpler and cheaper if only a limited quantity of workpieces is to be machined.

In a further alternative arrangement, the mould body may be formed from a flexible material, such as a polymer, that may be peeled away from the encapsulated workpiece after the fluid has been frozen.

According to a second aspect of the present disclosure there is provided a mould assembly for a workpiece, the mould assembly comprising:
a mould body; and
a mould cavity, the mould body enclosing the mould cavity,
wherein the mould body comprises a plurality of part locator rods, each of the part locator rods being located in the mould body and protruding into the mould cavity.

The mould body may be formed from metal, plastic, rubber or a combination of these materials.

The part locator rods may be formed from a metallic material such as steel, aluminium alloy or titanium alloy. Alternatively, they may be formed from a polymeric or fibre reinforced composite material. This material for the part locator rods may be selected to provide vibration damping to the encapsulated workpiece during machining operations, as well as to provide positional location of the workpiece.

In addition, the cross-sectional geometry, the form and the shape of the part locator rods may be adjusted in dependence on the size and geometry of the workpiece, for example to provide an increased contact area with the workpiece or to provide a conformal abutting surface against a spherical workpiece surface.

Optionally, the mould body is formed in two or more mould body portions.

Providing the mould body in two or more portion enables the mould body to be easily disassembled when removing the workpiece after the freezing of the encapsulation fluid. This enables the mould body to be reused.

In another arrangement the mould body is formed as a single portion that is that fractured after the freezing of the encapsulation fluid. This alternative arrangement may be simpler and cheaper if only a limited quantity of workpieces is to be machined.

Optionally, the mould body comprises at least two part locator rods, with a part locator rod being aligned in each of the orthogonal x and y directions to locate a workpiece positioned in the mould cavity in the x-y plane.

The use of part locator rods in each of the x and y directions enables a workpiece to be located in the x-y plane. For simple machining operations, such as hole drilling, this x-y location may be sufficient, and therefore provides a simple and cost effective means of positionally locating the workpiece.

Optionally, the mould body comprises at least six part locator rods, with corresponding pairs of part locator rods being aligned, in an opposing arrangement, in each of the three orthogonal x, y, and z directions to locate a workpiece positioned in the mould cavity in corresponding ones of each of the three x, y, and z planes.

The use of pairs of part locator rods in each of the three x, y, and z directions, with each respective pair of part locator rods in an opposing arrangement and abutting the workpiece, enables the workpiece to be accurately positioned on a machine tool, in the x, y, and z planes, after the workpiece has been encapsulated in the frozen fluid. This allows any machining operation to be precisely and accurately conducted on the workpiece without the need to access the surface of the workpiece.

According to a third aspect of the present disclosure there is provided a kit of parts for securing a workpiece for a machining operation, the kit of parts comprising:
a mould assembly according to the second aspect; and
a plurality of part locator rods.

The illustrative aspects of the disclosure are designed to solve one or more of the problems herein described and/or one or more other problems not discussed.

### Brief Description of the Drawings

There now follows a description of an embodiment of the disclosure, by way of nonlimiting example, with reference being made to the accompanying drawings in which:
Figure 1 shows a schematic sectional view of a mould assembly according to a first embodiment of the disclosure;
Figure 2 shows a schematic sectional view of the mould assembly of Figure 1 with the workpiece and part locator rods in position;
Figure 3 shows a schematic sectional view of the assemblage of Figure 2 with the further addition of the fluid;
Figure 4 shows a schematic sectional view of a mould assembly according to a second embodiment of the disclosure;
Figure 5 shows a schematic plan view of the encapsulated workpiece and part locator rods, as arranged by the mould assembly of Figure 4, positioned on a cooling plate; and
Figure 6 shows a schematic elevational view of the assemblage of Figure 5 mounted on a machine tool.

It is noted that the drawings may not be to scale. The drawings are intended to depict only typical aspects of the disclosure, and therefore should not be considered as limiting the scope of the disclosure. In the drawings, like numbering represents like elements between the drawings.

### Detailed Description

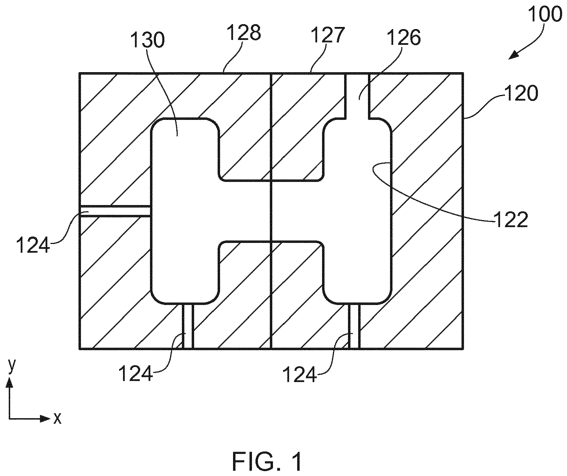

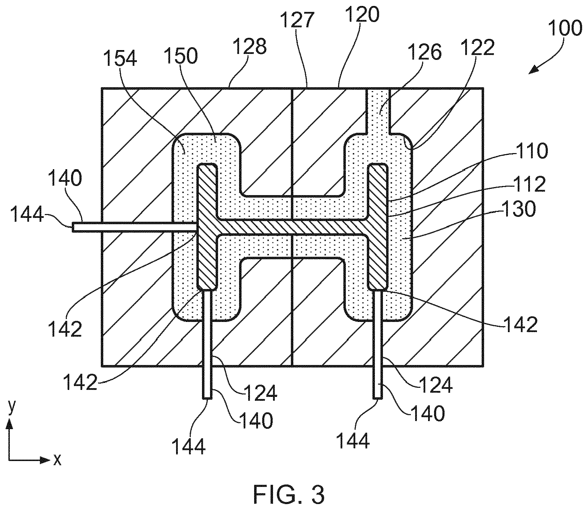

Referring to Figures 1 to 3, a mould assembly according to an embodiment of the disclosure is designated generally by the reference numeral 100.

The mould assembly 100 comprises a mould body 120 and a mould cavity 130, with the mould body 120 enclosing the mould cavity 130. In this arrangement, the mould body 120 comprises a first mould body portion 127 and a second mould body portion 128, which when assembled together form the enclosed mould cavity 130. The first and second mould body portions 127,128 may be formed from metal, plastic, ceramic, or another formable material.

In another arrangement, the mould body 120 may be formed as a single piece and encloses the mould cavity 130.

The mould cavity 130 has an internal surface 122, and a filling port 126. The filling port 126 allows for fluid communication between the exterior of the mould body 120 and the mould cavity 130. The filling port 126 enables a fluid to be introduced to the mould cavity 130.

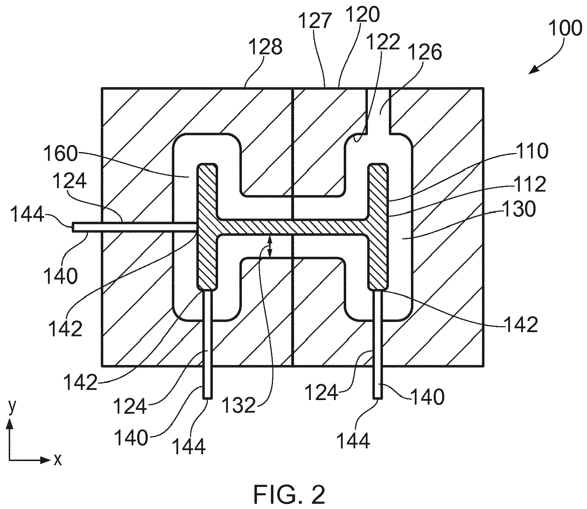

A workpiece 110 is positioned within the mould cavity 130 inside the mould body 120, as illustrated in Figure 2. The mould cavity 130 is shaped to accommodate the workpiece 110. A predetermined clearance 132 is defined between the internal surface 122 of the mould cavity and an outer surface 112 of the workpiece 110. The predetermined clearance 132 is provided over the entire outer surface 112 of the workpiece 110. In other words, the mould cavity 130 has a similar geometrical shape to the outer surface 112 of the workpiece 110, but is larger than the workpiece by at least the predetermined clearance 132. The predetermined clearance 132 may be uniform over the entire outer surface 112 of the workpiece 110.

In an alternative arrangement, the mould cavity 130 may have a different geometrical shape to that of the outer surface 112 of the workpiece 110 in order to provide a varying predetermined clearance 132 over the outer surface outer surface 112 of the workpiece 110. As previously described, this varying predetermined clearance 132 may be provided to suit different cutting conditions - or to provide additional support for a slender workpiece 110.

In the embodiment of the disclosure, the workpiece 110 is a laminated CMC component 110. In other arrangements, the workpiece 110 may be formed from a different composite material, or may be formed from a monolithic material.

The mould body 120 further comprises a plurality of part locator rod holes 124 with each part locator rod hole 124 extending through the mould body 120 to provide a passage into the mould cavity 130. In the present arrangement, the mould body 120 comprises three part rod locator holes 124.

A part locator rod 140 is accommodated in each corresponding part locator rod hole 124. Each part locator rod 140 has a distal end 142 and a proximal end 144. Each distal end 142 is positioned within the mould cavity 130 and abuts the outer surface 112 of the workpiece 110, while each corresponding proximal end 144 protrudes from the mould body 120.

The part locator rods 140 enable the spatial position of the outer surface 112 of the workpiece 110 to be precisely determined without requiring access to the outer surface 112.

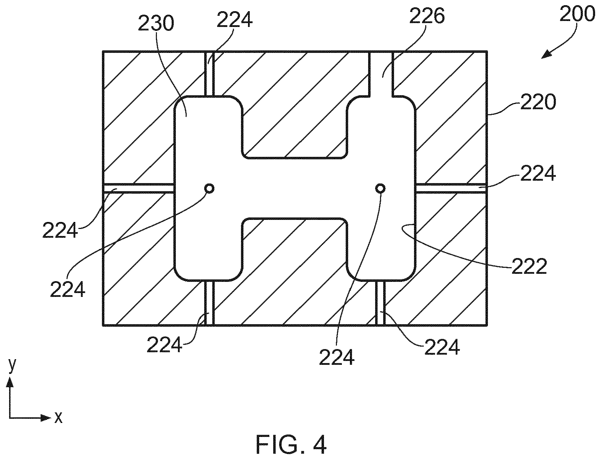

Referring to Figure 4, a mould assembly according to a second embodiment of the disclosure is designated generally by the reference numeral 200. Features of the mould assembly 200 which correspond to those of mould assembly 100 have been given corresponding reference numerals for ease of reference.

The mould assembly 200 comprises a mould body 220 and a mould cavity 230, with the mould body 220 enclosing the mould cavity 230. In this arrangement, the mould body 220 is formed as a single part. As outlined above, the mould body 220 may be formed from metal, plastic, ceramic, or another formable material.

The mould cavity 230 has an internal surface 222, and a filling port 226. The filling port 226 allows for fluid communication between the exterior of the mould body 220 and the mould cavity 230. The filling port 226 enables a fluid to be introduced to the mould cavity 230.

A workpiece 110 is positioned within the mould cavity 230 inside the mould body 220, with the mould cavity 230 being shaped to accommodate the workpiece 110.

In the embodiment shown in the figures, the mould body 120 comprises seven part locator rod holes 224, with part locator rod holes being aligned in each of the three orthogonal x, y, and z planes, so as to locate the workpiece 110 in each of the three x, y, and z planes.

Returning to the first embodiment of the mould assembly as shown in Figures 1 to 3, in use the workpiece 110 is positioned within the mould cavity 230 with the part locator rods 140 inserted into corresponding ones of the part locator rod holes 224 and abutting the outer surface 112 of the workpiece 110. At this point, a void 160 is defined between the outer surface 112 of the workpiece 110 and the internal surface 222 of the mould body 220.

A volume of fluid 150 is then poured into the inlet port 126 to fill the void 160. In the present embodiment the fluid 150 is a mixture of water, and a mineral oil and emulsifier additive 154. The mineral oil provides a cooling and lubricating effect for a subsequent machining operation, while the emulsifier ensures that the mineral oil remains in suspension in the water.

In an alternative arrangement, a water based additive may be mixed with the water 150 to provide cooling and lubrication for the cutting process.

The mould assembly 100 with the enclosed workpiece 110 and fluid 150 is then frozen. The increase in volume caused by the freezing of the fluid 150 (i.e. during the change from a liquid to a frozen solid) results in compressive forces acting on the workpiece 110.

The workpiece 110 is removed from the mould body 120 with the part locator rods 140 held in the frozen fluid 150 and still abutting the outer surface 112 of the workpiece 110. The encapsulated workpiece is then placed on a cooling fixture to reduce the melting of the frozen fluid 150.

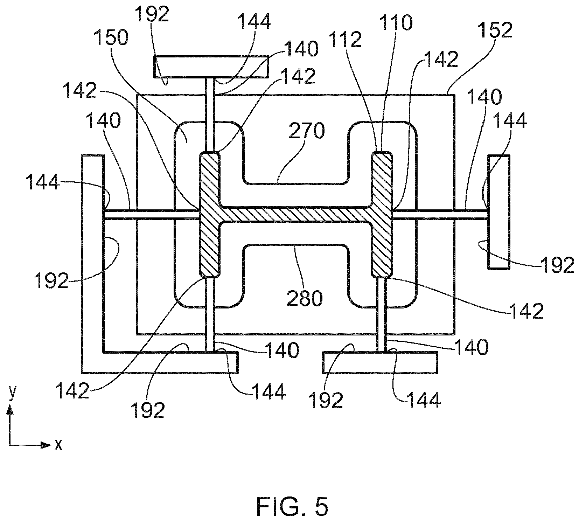

Figure 5 illustrates an encapsulated workpiece 280 according to the second embodiment that has been positioned on a cooling fixture 152 to reduce the melting of the frozen fluid 150. In the embodiment of the disclosure the cooling fixture 152 is a Peltier plate 152.

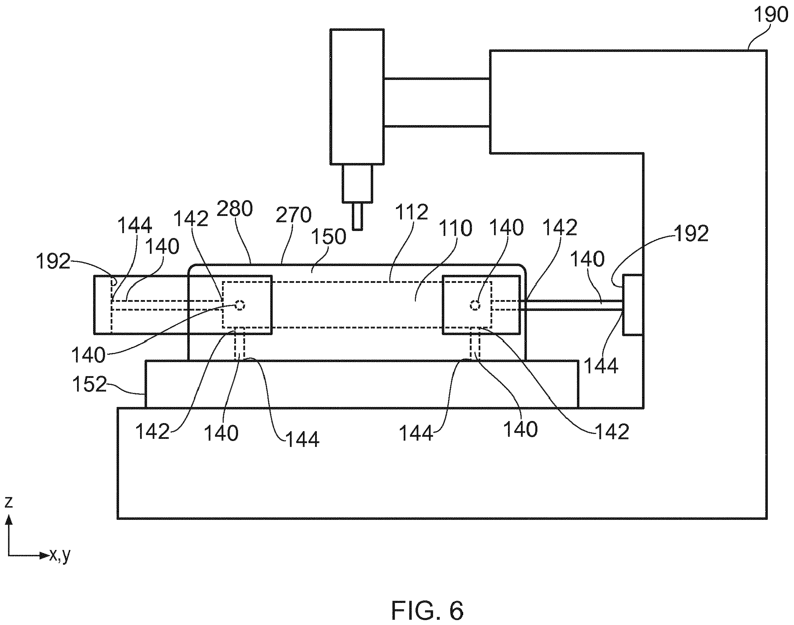

Figure 6 shows the encapsulated workpiece 280 and the cooling fixture 152 positioned on a machine tool 190 with each of the part locator rods 140 being located against a corresponding machine tool datum surface 192. In other words, the proximal end 144 of each part locator rod 140 is located against a corresponding machine tool datum surface 192. This ensures that with the encapsulated workpiece 280 positioned on the machine tool 190, the spatial position of the workpiece 110 can be precisely determined from the spatial position of the proximal ends 144 of the part locator rods 140.

One or more machining operations may then be carried out on the encapsulated workpiece 280 using the machine tool 190. The machining operation(s) will remove the frozen fluid 150 before cutting into the workpiece 110.

The disclosure includes methods that may be performed using the subject devices. The methods may comprise the act of providing such a suitable device. Such provision may be performed by the end user. In other words, the "providing" act merely requires the end user obtain, access, approach, position, set-up, activate, power-up or otherwise act to provide the requisite device in the subject method. Methods recited herein may be carried out in any order of the recited events which is logically possible, as well as in the recited order of events.

Except where mutually exclusive, any of the features may be employed separately or in combination with any other features and the disclosure extends to and includes all combinations and sub-combinations of one or more features described herein.

The foregoing description of various aspects of the disclosure has been presented for purposes of illustration and description. Such modifications and variations that may be apparent to a person of skill in the art are included within the scope of the disclosure as defined by the accompanying claims.

## Claims

1. A method of securing a workpiece for a machining operation, the method comprising the steps of:
(i) providing a mould, the mould comprising a mould body and a mould cavity;
(ii) positioning the workpiece within the mould cavity;
(iii) providing a plurality of part locator rods, each of the part locator rods being located in the mould body and protruding into the mould cavity, a distal end of each part locator rod abutting against an outer surface of the workpiece;
(iv) providing a fluid, the fluid filling a void defined between an outer surface of the workpiece and an internal surface of the mould cavity;
(v) cooling the mould, workpiece and fluid to a temperature below a freezing point of the fluid;
(vi) removing the workpiece encapsulated in the frozen fluid, from the cavity, with the part locator rods protruding from an outer surface of the frozen fluid;
(vii) securing the encapsulated workpiece on a machine tool; and
(viii) using the protruding part locator rods to position the workpiece on the machine tool in readiness for the machining operation.

2. The method as claimed in Claim 1, wherein the mould cavity is sized to accommodate the workpiece with a predetermined clearance between the outer surface of the workpiece and the internal surface of the mould cavity.

3. The method as claimed in Claim 1 or Claim 2, wherein step (vi) comprises the additional subsequent step of:
(vi)' positioning the encapsulated workpiece on a cooling fixture.

4. The method as claimed in any one of Claims 1 to 3, wherein step (iii) comprises the additional subsequent step of:
(iii)' positioning a part locator rod in each of the orthogonal x and y directions, each part locator rod being positioned to abut the workpiece so as to locate the workpiece in the x-y plane.

5. The method as claimed in any one of Claims 1 to 3, wherein step (iii) comprises the additional subsequent step of:
(iii)' positioning pairs of part locator rods in each of the three orthogonal x, y, and z directions, each pair of part locator rods being positioned in an opposing arrangement to abut the workpiece so as to locate the workpiece in each of the three x, y, and z planes.

6. The method as claimed in any one of Claims 1 to 5, wherein the fluid is water.

7. The method as claimed in Claim 3, wherein the cooling fixture is selected from the group consisting of thermoelectric cooling devices, and induction cooling plates.

8. The method as claimed in any one of Claims 1 to 7, wherein step (vii) comprises the additional subsequent step of:
(vii)' cooling the machine tool.

9. The method as claimed in any one of Claims 6 to 8, wherein the fluid further comprises a mineral oil in combination with an emulsifying agent.

10. The method as claimed in Claim 9, wherein the emulsifying agent is a detergent.

11. The method as claimed in any one of Claims 1 to 8, wherein the mould body is formed in two or more mould body portions.

12. A mould assembly for a workpiece, the mould assembly comprising:
a mould body; and
a mould cavity, the mould body enclosing the mould cavity,
wherein the mould body comprises a plurality of part locator rods, each of the part locator rods being located in the mould body and protruding into the mould cavity.

13. The mould assembly as claimed in Claim 12, wherein the mould body is formed in two or more mould body portions.

14. The mould assembly as claimed in Claim 12 or Claim 13, wherein the mould body comprises at least two part locator rods, with a part locator rod being aligned in each of the orthogonal x and y directions to locate a workpiece positioned in the mould cavity in the x-y plane.

15. The mould assembly as claimed in Claim 12 or Claim 13, wherein the mould body comprises at least six part locator rods, with corresponding pairs of part locator rods being aligned, in an opposing arrangement, in each of the three orthogonal x, y, and z directions to locate a workpiece positioned in the mould cavity in corresponding ones of each of the three x, y, and z planes.
